# FASCICULE DE BREVET EUROPEEN

(11) **EP 1 667 877 B1**
(45) Date de publication et mention de la délivrance du brevet: **02.01.2008**
(21) Numéro de dépôt: 04787456.5
(22) Date de dépôt: 27.09.2004
(51) Int. Cl.: B60R 19/18

(54) **ABSORBEUR POUR PARE-CHOCS DE VEHICULE LOCALEMENT DEFORMABLE**
LOKAL VERFORMBARER FAHRZEUGSTOSSFÄNGERDÄMPFER
LOCALLY-DEFORMABLE VEHICLE BUMPER SHOCK ABSORBER

(30) Priorité: 26.09.2003 FR 0311292
(43) Date de publication de la demande: 14.06.2006
(73) Titulaire: Cadence Innovation, 27950 Saint Marcel (FR)
(72) Inventeur: BOUCHEZ, Emilie, F-27120 Le Plessis Hebert (FR); DELMAS, Laurent, F-27200 Vernon (FR); RENAULT, Thierry, F-27200 Vernon (FR)
(74) Mandataire: Remy, Vincent Noel Paul
(86) Numéro de dépôt international: PCT/FR2004/002433
(87) Numéro de publication internationale: WO 2005/030533

(56) Documents cités:
- US-A- 5 425 561
- US-A- 5 507 540
- US-A- 6 082 792
- US-B1- 6 290 272

## Description

L'invention concerne les pare-chocs de véhicule et leur procédé de fabrication.

Il est connu de disposer derrière la peau de pare-chocs d'un véhicule et en avant de la poutre elle-même un absorbeur de chocs, destiné notamment à absorber l'énergie des chocs à basse vitesse. Un tel agencement est par exemple divulgué dans le document DE-198 61 026.

De plus, un absorbeur avec les caractéristiques du préambule de la revendication indépendante 1 est divulgué dans le document US-A-6082792.

Les pare-chocs de véhicules doivent aujourd'hui être conformes à différentes normes définies par la réglementation. Ces normes renvoient à différents types de chocs appelés respectivement choc piéton, choc basse vitesse et choc Danner définis par ailleurs et qui ne seront pas présentés en détail ici.

En plus de passer de façon satisfaisante les tests relatifs à chacun de ces chocs, le pare-chocs doit de préférence obéir aux contraintes suivantes :
- respecter le design du véhicule ;
- absorber efficacement l'énergie du choc le plus tôt possible lors de l'impact ;
- permettre une fixation simple de l'absorbeur au pare-chocs ;
- autoriser l'intégration de câbles électriques au pare-chocs ;
- et enfin se comporter de façon satisfaisante entre -20° et +40°C.

Un but de l'invention est donc de fournir un pare-chocs qui se comporte de façon satisfaisante lors des chocs précités et réponde autant que possible à ces différentes contraintes.

A cet effet, on prévoit selon l'invention un absorbeur pour pare-chocs de véhicule, comprenant :
- un support ; et
- des lamelles s'étendant vers l'avant à partir du support et présentant une face dirigée vers l'intérieur de l'absorbeur, l'absorbeur présentant, pour chaque lamelle, une ouverture s'étendant en regard de la face et débouchant à l'extérieur de l'absorbeur.

Ainsi, les lamelles situées dans la zone du choc peuvent se déformer très facilement pour absorber une grande partie de l'énergie du choc. Cette énergie est absorbée d'autant plus efficacement que les lamelles éloignées de la zone du choc ne seront pas en général déformées.

L'absorbeur selon l'invention peut présenter en outre au moins l'une quelconque des caractéristiques suivantes :
- la face étant une première face, chaque lamelle présente une deuxième face dirigée vers l'extérieur de l'absorbeur;
- chaque lamelle est plane ;
- chaque lamelle s'étend dans un plan horizontal ;
- chaque lamelle s'étend à partir de l'une seulement des moitiés inférieure et supérieure du support ;
- chaque lamelle s'étend à partir d'un bord longitudinal du support;
- les lamelles s'étendent à partir de l'une des moitiés supérieure et inférieure du support en alternance le long du support ;
- chaque lamelle comprend une nervure de renfort ;
- il présente à chaque extrémité longitudinale une zone d'extrémité, ayant une longueur supérieure à une plus grande largeur des lamelles;
- chaque zone d'extrémité est dépourvue de lamelle ;
- chaque zone d'extrémité est agencée pour présenter une rigidité à l'égard d'un choc à partir de l'avant plus grande qu'une zone quelconque de l'absorbeur pourvue de lamelles ;
- chaque zone d'extrémité présente des nervures verticales ;
- il présente une paroi avant en contact avec les lamelles et s'étendant à l'avant de celles-ci ;
- le support comprend une paroi verticale à partir de laquelle s'étendent les lamelles ;
- le support est agencé pour présenter une plus grande rigidité à l'égard d'un choc à partir de l'avant qu'une zone quelconque de l'absorbeur pourvue de lamelles ;
- le support comprend des nervures ;
- le support comprend une paroi horizontale ; et
- il est agencé pour être fabriqué en intégralité par moulage entre deux parties de moule mobiles l'une par rapport à l'autre.

On prévoit également selon l'invention un pare-chocs pour véhicule comprenant un absorbeur selon l'invention.

On prévoit de plus selon l'invention un procédé de fabrication d'un absorbeur selon l'invention, l'absorbeur étant fabriqué par moulage.

Avantageusement, on moule l'absorbeur entre deux parties de moule, mobiles l'une par rapport à l'autre suivant une direction correspondant à la direction verticale de l'absorbeur.

Avantageusement encore, on moule l'intégralité de l'absorbeur au moyen de deux parties de moule mobiles l'une par rapport à l'autre.

D'autres caractéristiques, buts et avantages de l'invention apparaîtront encore dans la description suivante d'un mode préféré de réalisation donné à titre d 'exemple non limitatif en référence aux dessins annexés sur lesquels :
- la figure 1 est une vue en perspective d'un pare-chocs selon l'invention montrant la peau de pare-chocs et l'absorbeur ;
- les figures 2 et 4 sont des vues en perspective de la moitié gauche de l'absorbeur de la figure 1 ;
- la figure 3 est une vue à plus grande échelle d'une partie de l'absorbeur de la figure 2 ;
- les figures 5 et 6 sont deux vues schématiques en coupe suivant un plan vertical longitudinal médian montrant le comportement du pare-chocs de la figure 1 lors d'un test de choc à basse vitesse, respectivement avant et en fin de choc ;
- les figures 7 et 8 sont des vues analogues aux figures 5 et 6 relatives à un choc piéton ; et
- la figure 9 est une vue schématique d'un moule de fabrication de l'absorbeur de la figure 2.

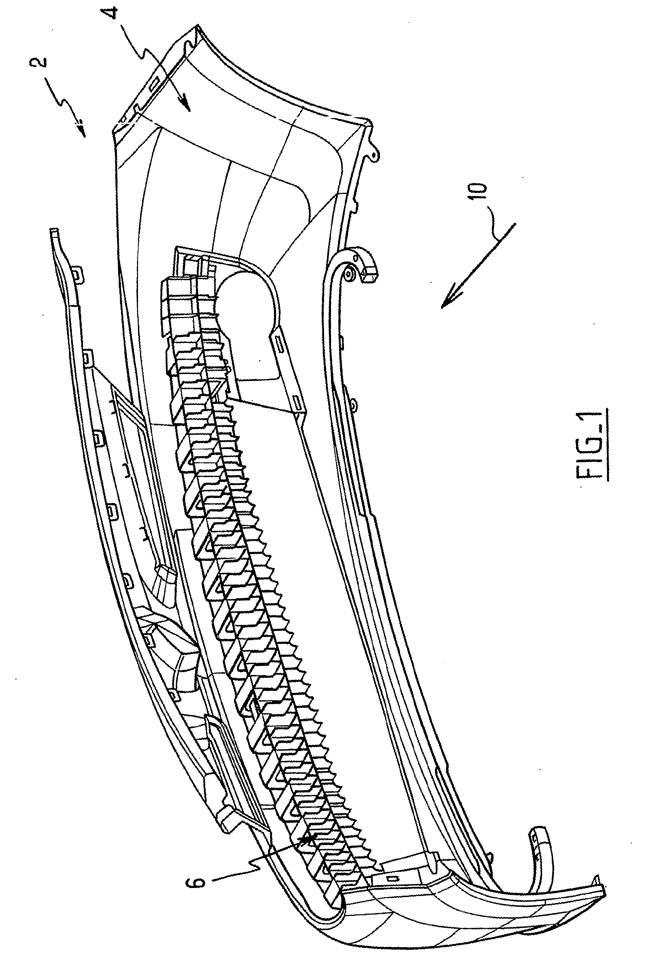

On a illustré à la figure 1 un pare-chocs selon un mode préféré de réalisation de l'invention.

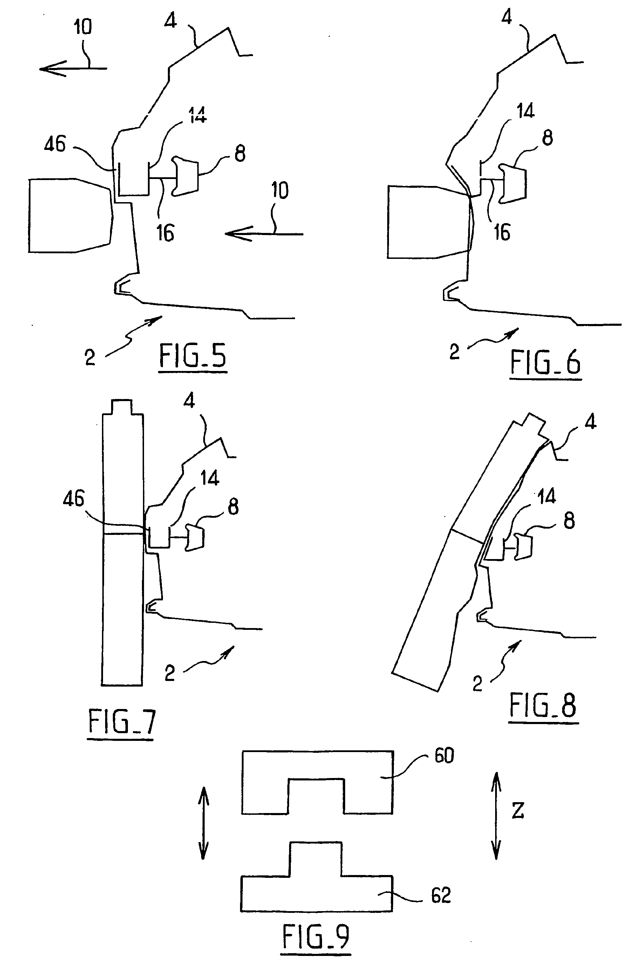

Le pare-chocs 2 comprend une peau de pare-chocs 4 ainsi qu'un absorbeur 6. Le pare-chocs comprend en outre une poutre 8 non représentée sur la figure 1 mais illustré aux figures 5 à 8. L'absorbeur 6 s'étend derrière la peau 4 et devant la poutre 8 par référence à la direction et au sens de marche avant du véhicule illustré par la flèche 10 sur les figures.

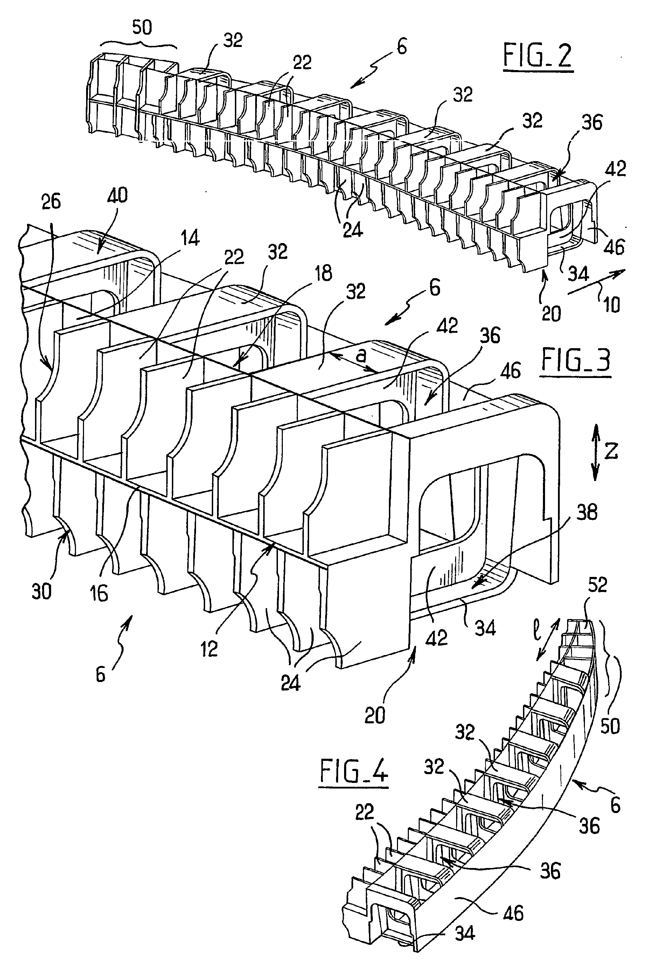

On va maintenant décrire en détail l'absorbeur 6 en référence aux figures 1 à 4. L'absorbeur 6 est d'une seule pièce, en matière plastique. Il s'étend d'une extrémité à l'autre de la poutre 8 et sur la plus grande partie de la peau 4.

L'absorbeur 6 présente un support 12 comprenant une paroi 14 essentiellement plane verticale mais présentant tout comme l'absorbeur 6 en général un galbe dans un plan horizontal correspondant au galbe général de l'avant du véhicule. Le support 12 comprend une paroi plane horizontale 16 s'étendant à partir de l'arrière de la paroi 14, vers l'arrière, à mi-distance des bords supérieur 18 et inférieur 20 de la paroi 14 et qui suit le galbe de la partie 8.

Le support comprend des nervures 22, 24 réparties en deux réseaux situés respectivement au-dessus et au-dessous de la paroi arrière 16. Chaque nervure 22, 24 est plane, verticale et parallèle à la direction de marche 10 du véhicule. Les nervures de chaque réseau s'étendent parallèlement les unes aux autres et à distance les unes des autres. Néanmoins les nervures 22 du réseau supérieur ne sont pas en coïncidence avec les nervures 24 du réseau inférieur. Elles sont en quinconce avec celles-ci de sorte que le pied de chaque nervure 22 du réseau supérieur s'étend à mi-distance du pied des deux nervures 24 les plus proches du réseau inférieur, et inversement. Chaque nervure a une forme essentiellement rectangulaire. Le coin supérieur arrière de chaque nervure du réseau supérieur étant entamé par une découpe en arc de cercle 26 dont le centre de courbure est situé en dehors de la nervure. Le coin inférieur arrière 30 des nervures du réseau inférieur est entamé de façon similaire. De cette façon, l'absorbeur s'emboîte dans la forme de la poutre. Chaque nervure est en contact avec les parois 14 et 16.

A l'avant du support 18, l'absorbeur 6 comprend deux séries de lamelles planes horizontales 32, 34. Les lamelles 32 de la série supérieure s'étendent à partir du bord 18 de la paroi 14 tandis que les lamelles 34 de la série inférieure s'étendent à partir du bord 20 de cette paroi. Les lamelles de chaque série sont séparées et distantes les unes des autres. Les lamelles de chaque série sont coplanaires entre-elles. De même que pour les nervures 22, 24, les lamelles de la série supérieure sont décalées par rapport aux lamelles de la série inférieure. Sachant que les lamelles de chaque série ménagent entre elles des ouvertures 36, il s'ensuit que chaque lamelle 32 de la série supérieure s'étend en regard d'une ouverture 36 ménagée entre les lamelles 34 de la série inférieure. De même, les lamelles 34 de la série inférieure s'étendent chacune en regard d'une ouverture 36 ménagée entre les lamelles de la série supérieure. Chacune des lamelles 32, 34 présente donc une face interne 38 s'étendant en regard de l'une des ouvertures 36, laquelle débouche à l'extérieur de l'absorbeur. Chacune des faces internes 38 est orientée vers l'intérieur de l'absorbeur.

Chaque lamelle présente en outre une face externe 40 opposée à la face 38 et orientée vers l'extérieur de l'absorbeur.

Compte tenu de cette disposition en quinconce, lorsque l'on parcourt l'absorbeur suivant sa direction longitudinale, les lamelles s'étendent à partir du bord inférieur et du bord supérieur de la paroi 14 suivant une alternance spatiale.

Dans le présent exemple, l'absorbeur comprend pour chaque lamelle 32, 34 une nervure de renfort 42 de forme plane, verticale et parallèle à la direction de marche 10. La nervure s'étend à partir de la face interne 38 de la lamelle en direction de l'ouverture 36 opposée.

L'absorbeur 6 comprend une paroi avant commune unique 46 s'étendant à l'avant des lamelles 32, 34. L'extrémité avant de chacune de ces lamelles est recourbée pour rejoindre continûment le bord longitudinal supérieur ou inférieur de la paroi. De même, chaque nervure 42 s'étend jusqu'à la face interne de la paroi 46.

A chaque extrémité longitudinale de l'absorbeur, se trouve une zone d'extrémité 50 dépourvue de lamelle et présentant une longueur I suivant la direction longitudinale de l'absorbeur supérieure à la plus grande largeur des lamelles mesurée selon la même direction. Chaque zone d'extrémité 50 est agencée pour présenter une rigidité à l'égard d'un choc à partir de l'avant, plus grande qu'une quelconque des zones de l'absorbeur pourvue de lamelles. Les parois 14, 16 et 46 s'étendent jusque dans les zones d'extrémité 50 ainsi que les nervures 22 et 24. En revanche, les lamelles y sont remplacées par des nervures verticales 52 semblables aux nervures 22 et 24.

Si l'on désigne par partie arrière de l'absorbeur la partie s'étendant en arrière de la paroi 14 et par partie avant, la partie s'étendant en avant de la paroi 14, il s'avère que la partie arrière présente une plus grande rigidité que la partie avant.

Le comportement de l'absorbeur est illustré aux figures 5 et 6 lors d'un choc à basse vitesse, la figure 5 montrant le pare-chocs avant le choc et la figure 6 montrant le pare-chocs en fin de choc. De même, son comportement est illustré pour un choc piéton aux figures 7 et 8. Les vues correspondant aux figures 5 à 8 sont des sections correspondant à la section y0 du véhicule, c'est à dire le plan longitudinal vertical médian de celui-ci.

Chacune des lamelles avec la nervure 42 correspondante forme un absorbeur unitaire. Sachant que le choc piéton requiert que l'absorbeur soit relativement mou en partie avant pour minimiser l'accélération provoquée par le choc sur la jambe, cet agencement rend la partie avant de l'absorbeur suffisamment souple. Bien entendu, on peut ajuster la rigidité des lamelles en jouant sur sa forme ou ses dimensions de même que sur celle de la nervure associée.

En revanche, le choc à basse vitesse, testé au moyen d'un impacteur de 600 mm de large, fait fonctionner une plus grande surface de l'absorbeur et donc beaucoup plus d'absorbeurs unitaires. La rigidité de la partie arrière de l'absorbeur permet de limiter l'intrusion de l'impacteur lors d'un tel choc. Cette rigidité est conférée par les deux réseaux de nervures 22,24.

L'absorbeur 6 est situé en regard de la poutre de pare-chocs et son axe de symétrie est le même que celui de la poutre pour ne pas déstabiliser l'ensemble du pare-chocs lors du choc Danner. Par ailleurs, on pourra ajuster la répartition entre la partie souple et la partie rigide en fonction de la position de l'appui bas rigide par ailleurs prévu dans le pare-chocs, afin de minimiser l'angle de flexion du genou. Les zones d'extrémité 50 où s'applique seulement le choc à basse vitesse ont une forme les rendant très rigides, ce qui limite l'intrusion lors de chocs en coin.

Les résultats montrent que l'absorbeur peut respecter le cahier des charges en choc piéton et en choc basse vitesse. Le pare-chocs, par ailleurs, se comporte de façon satisfaisante en choc Danner.

L'absorbeur 6 est fabriqué par moulage par injection d'un matériau thermoplastique. Un des avantages de l'absorbeur tel qu'il vient d'être décrit est qu'il peut être moulé en intégralité au moyen de deux parties de moules 60 et 62 illustrée schématiquement à la figure 9 et mobiles l'une par rapport à l'autre suivant une direction verticale Z correspondant à la direction verticale de l'absorbeur et du véhicule, une fois l'absorbeur installé sur le véhicule.

Bien entendu, on pourra apporter à l'invention de nombreuses modifications sans sortir du cadre de celle-ci. Ainsi, on pourra modifier la forme, la disposition et les dimensions de chaque partie de l'absorbeur.

Sans nécessairement prévoir, pour chaque lamelle, une ouverture débouchant à l'extérieur de l'absorbeur et s'étendant en regard de la face interne de la lamelle, on pourra prévoir un absorbeur pour pare-chocs de véhicule comprenant un support et des lamelles planes distantes les unes des autres et s'étendant à partir du support vers l'avant, chaque lamelle s'étendant dans un plan horizontal.

De même, on pourra prévoir, indépendamment de cette position de l'ouverture ou encore de l'extension de chaque lamelle dans un plan horizontal, un absorbeur pour pare-chocs de véhicule comprenant un support et des lamelles s'étendant vers l'avant à partir du support, l'absorbeur étant agencé pour être fabriqué en intégralité par moulage entre deux parties de moules mobiles l'une par rapport à l'autre.

Pareillement on pourra prévoir, indépendamment de ces caractéristiques, un procédé de fabrication d'un absorbeur pour pare-chocs de véhicule, comprenant un support et des lamelles s'étendant vers l'avant à partir du support, dans lesquels on moule l'intégralité de l'absorbeur au moyen de deux parties de moule mobiles l'une par rapport à l'autre.

On pourra prévoir de disposer un absorbeur dans la partie basse du pare-chocs en ajustant les dimensions des lamelles à la rigidité demandée dans cette zone.

## Revendications

1. Absorbeur (6) pour pare-chocs (2) de véhicule, comprenant :
- un support (12) ; et
- des lamelles (32, 34) s'étendant vers l'avant à partir du support et présentant une face (38) dirigée vers l'intérieur de l'absorbeur,
**caractérisé en ce qu'**il présente, pour chaque lamelle, une ouverture (36) s'étendant en regard de la face (38) et débouchant à l'extérieur de l'absorbeur.

2. Absorbeur selon la revendication précédente, **caractérisé en ce que**, la face (38) étant une première face, chaque lamelle (32,34) présente une deuxième face (40) dirigée vers l'extérieur de l'absorbeur.

3. Absorbeur selon au moins l'une quelconque des revendications précédentes, **caractérisé en ce que** chaque lamelle (32, 34) est plane.

4. Absorbeur selon au moins l'une quelconque des revendications précédentes, **caractérisé en ce que** chaque lamelle (32, 34) s'étend dans un plan horizontal.

5. Absorbeur selon au moins l'une quelconque des revendications précédentes, **caractérisé en ce que** chaque lamelle (32, 34) s'étend à partir de l'une seulement des moitiés inférieure et supérieure du support (12).

6. Absorbeur selon au moins l'une quelconque des revendications précédentes, **caractérisé en ce que** chaque lamelle (32, 34) s'étend à partir d'un bord longitudinal (18, 20) du support (12).

7. Absorbeur selon au moins l'une quelconque des revendications précédentes, **caractérisé en ce que** les lamelles (32, 34) s'étendent à partir de l'une des moitiés supérieure et inférieure du support (12) en alternance le long du support.

8. Absorbeur selon au moins l'une quelconque des revendications précédentes, **caractérisé en ce qu'**il comprend pour chaque lamelle (32, 34) une nervure de renfort (42).

9. Absorbeur selon au moins l'une quelconque des revendications précédentes, **caractérisé en ce qu'**il présente à chaque extrémité longitudinale une zone d'extrémité (50) ayant une longueur supérieure à une plus grande largeur des lamelles (32, 34).

10. Absorbeur selon la revendication précédente, **caractérisé en ce que** chaque zone d'extrémité (50) est dépourvue de lamelle.

11. Absorbeur selon au moins l'une quelconque des revendications 9 ou 10, **caractérisé en ce que** chaque zone d'extrémité (50) est agencée pour présenter une rigidité à l'égard d'un choc à partir de l'avant plus grande qu'une zone quelconque de l'absorbeur pourvue de lamelles.

12. Absorbeur selon au moins l'une quelconque des revendications 9 à 11, **caractérisé en ce que** chaque zone d'extrémité (50) présente des nervures verticales (22, 24, 52).

13. Absorbeur selon au moins l'une quelconque des revendications précédentes, **caractérisé en ce qu'**il présente une paroi avant (46) en contact avec les lamelles (32, 34) et s'étendant à l'avant de celles-ci.

14. Absorbeur selon au moins l'une quelconque des revendications précédentes, **caractérisé en ce que** le support (12) comprend une paroi verticale (14) à partir de laquelle s'étendent les lamelles.

15. Absorbeur selon au moins l'une quelconque des revendications précédentes, **caractérisé en ce que** le support (12) est agencé pour présenter une plus grande rigidité à l'égard d'un choc à partir de l'avant qu'une zone quelconque de l'absorbeur pourvue de lamelles.

16. Absorbeur selon au moins l'une quelconque des revendications précédentes, **caractérisé en ce que** le support (12) comprend des nervures (22, 24).

17. Absorbeur selon au moins l'une quelconque des revendications précédentes, **caractérisé en ce que** le support (12) comprend une paroi horizontale (16).

18. Absorbeur selon au moins l'une quelconque des revendications précédentes, **caractérisé en ce qu'**il est agencé pour être fabriqué en intégralité par moulage entre deux parties de moule (60, 62) mobiles l'une par rapport à l'autre.

19. Pare-chocs pour véhicule, **caractérisé en ce qu'**il comprend un absorbeur selon au moins l'une quelconque des revendications précédentes.

20. Procédé de fabrication d'un absorbeur selon au moins l'une quelconque des revendications précédentes, **caractérisé en ce que** l'on fabrique l'absorbeur par moulage.

21. Procédé selon la revendication précédente, **caractérisé en ce qu'**on moule l'absorbeur entre deux parties de moule (60, 62), mobiles l'une par rapport à l'autre suivant une direction (Z) correspondant à la direction verticale de l'absorbeur.

22. Procédé selon l'une quelconque des deux revendications précédentes, **caractérisé en ce qu'**on moule l'intégralité de l'absorbeur au moyen de deux parties de moule (60, 62) mobiles l'une par rapport à l'autre.

## Claims

1. An absorber (6) for vehicle bumper (2), comprising: a support (12); and strips (32, 34) extending forwards from the support and having a face (38) directed towards the interior of the absorber, **characterized in that** it has for each strip, an opening (36) extending opposite the face (38) and opening onto the exterior of the absorber.

2. The absorber according to the preceding claim, **characterized in that**, the face (38) being a first face, each strip (32, 34) has a second face (40) directed towards the exterior of the absorber.

3. The absorber according to at least any one of the preceding claims, **characterized in that** each strip (32, 34) is planar.

4. The absorber according to at least any one of the preceding claims, **characterized in that** each strip (32, 34) extends in a horizontal plane.

5. The absorber according to at least any one the preceding claims, **characterized in that** each strip (32, 34) extends from only one of the lower and upper halves of the support (12).

6. The absorber according to at least any one the preceding claims, **characterized in that** each strip (32, 34) extends from a longitudinal edge (18, 20) of the support (12).

7. The absorber according to at least any one of the preceding claims, **characterized in that** the strips (32, 34) extend from one of the upper and lower halves of the support 12, alternating along the support.

8. The absorber according to at least any one of the preceding claims, **characterized** it comprises a strengthening rib (42) for each strip (32, 34).

9. The absorber according to at least any one of the preceding claims, **characterized** it has at each longitudinal end, an end area (50) with a length larger than a larger width of the strips (32, 34).

10. The absorber according to the preceding claim, **characterized in that** each end area (50) is without any strip.

11. The absorber according to at least any one of claims 9 or 10, **characterized in that** each end area (50) is arranged so as to exhibit greater stiffness with regards to impact from the front than any area of the absorber provided with strips.

12. The absorber according to at least any one of claims 9 to 11, **characterized in that** each end area (50) has vertical ribs (22, 24, 52).

13. The absorber according to at least any one of the preceding claims, **characterized in that** it has a front wall (46) in contact with the strips (32, 34) and extending at the front of the latter.

14. The absorber according to at least any one of the preceding claims, **characterized in that** the support (12) comprises a vertical wall (14) from which extend the strips.

15. The absorber according to at least any one of the preceding claims, **characterized in that** the support (12) is arranged so as to exhibit greater stiffness with regards to impact from the front than any area of the absorber provided with strips.

16. The absorber according to at least any one of the preceding claims, **characterized in that** the support (12) comprises ribs (22, 24).

17. The absorber according to at least any one of the preceding claims, **characterized in that** the support (12) comprises a horizontal wall (16).

18. The absorber according to at least any one of the preceding claims, **characterized in that** it is arranged so as to be wholly manufactured by moulding between two mould portions (60, 62) mobile relatively to each other.

19. A vehicle bumper, **characterized in that** it comprises an absorber according to at least any one of the preceding claims.

20. A method for manufacturing an absorber according to at least any one of the preceding claims, **characterized in that** the absorber is manufactured by moulding.

21. The method according to the preceding claim, **characterized in that** the absorber is moulded between two mould portions (60, 62) mobile relatively to each other along a direction (Z) corresponding to the vertical direction of the absorber.

22. The method according to any of both of the preceding claims, **characterized in that** the whole of the absorber is moulded by means of two mould portions (60, 62) mobile relatively to each other.

## Patentansprüche

1. Stoßabsorber (6) für Fahrzeug-Stoßfänger (2) umfassend:
- einen Träger (12); und
- Lamellen (32, 34), die vom Träger aus nach vorne verlaufen und eine Seite (38) aufweisen, die zum Inneren des Absorbers hin gerichtet ist,
**dadurch gekennzeichnet, dass** er für jede Lamelle eine Öffnung (36) aufweist, die der Seite (38) gegenüberliegend verläuft und auf der Außenseite des Stoßabsorbers offen ist.

2. Stoßabsorber nach dem vorherigen Anspruch, **dadurch gekennzeichnet, dass** die Seite (38) eine erste Seite ist und jede Lamelle (32, 34) eine zweite Seite (40) aufweist, die zur Außenseite des Stoßabsorbers hin gerichtet ist.

3. Stoßabsorber nach mindestens einem der vorherigen Ansprüche, **dadurch gekennzeichnet, dass** jede Lamelle (32, 34) flach ist.

4. Stoßabsorber nach mindestens einem der vorherigen Ansprüche, **dadurch gekennzeichnet, dass** jede Lamelle (32, 34) in einer horizontalen Ebene verläuft.

5. Stoßabsorber nach mindestens einem der vorherigen Ansprüche, **dadurch gekennzeichnet, dass** jede Lamelle (32, 34) nur von einer der unteren und oberen Hälften des Trägers (12) aus verläuft.

6. Stoßabsorber nach mindestens einem der vorherigen Ansprüche, **dadurch gekennzeichnet, dass** die Lamellen (32, 34) von einer Längskante (18, 20) des Trägers (12) aus verläuft.

7. Stoßabsorber nach mindestens einem der vorherigen Ansprüche, **dadurch gekennzeichnet, dass** jede Lamelle (32, 34) von einer der oberen und unteren Hälften des Trägers (12) aus abwechselnd entlang des Trägers verläuft.

8. Stoßabsorber nach mindestens einem der vorherigen Ansprüche, **dadurch gekennzeichnet, dass** er für jede Lamelle (32, 34) eine Verstärkungsrippe (42) umfasst.

9. Stoßabsorber nach mindestens einem der vorherigen Ansprüche, **dadurch gekennzeichnet, dass** er an jedem Längsende eine Endzone (50) aufweist, deren Länge größer als eine größere Breite der Lamellen (32, 34) ist.

10. Stoßabsorber nach dem vorherigen Anspruch, **dadurch gekennzeichnet, dass** jede Endzone (50) lamellenlos ist.

11. Stoßabsorber nach mindestens einem der Ansprüche 9 oder 10, **dadurch gekennzeichnet, dass** jede Endzone (50) ausgelegt ist, um eine Steifigkeit im Hinblick auf einen Stoß von vorne aufzuweisen, die größer ist als die jeder mit Lamellen versehenen Zone des Stoßabsorbers ist.

12. Stoßabsorber nach mindestens einem der Ansprüche 9 bis 11, **dadurch gekennzeichnet, dass** jede Endzone (50) vertikale Rippen (22, 24, 52) aufweist.

13. Stoßabsorber nach mindestens einem der vorherigen Ansprüche, **dadurch gekennzeichnet, dass** er eine Vorderwand (46) aufweist, die mit den Lamellen (32, 34) in Kontakt ist und auf deren Vorderseite verläuft.

14. Stoßabsorber nach mindestens einem der vorherigen Ansprüche, **dadurch gekennzeichnet, dass** der Träger (12) eine vertikale Wand (14) umfasst, von der aus die Lamellen verlaufen.

15. Stoßabsorber nach mindestens einem der vorherigen Ansprüche, **dadurch gekennzeichnet, dass** der Träger (12) ausgelegt ist, um im Hinblick auf einen Stoß von vorne eine größere Steifigkeit als jede mit Lamellen versehene Zone des Stoßabsorbers aufzuweisen.

16. Stoßabsorber nach mindestens einem der vorherigen Ansprüche, **dadurch gekennzeichnet, dass** der Träger (12) Rippen (22, 24) umfasst.

17. Stoßabsorber nach mindestens einem der vorherigen Ansprüche, **dadurch gekennzeichnet, dass** der Träger (12) eine horizontale Wand (16) umfasst.

18. Stoßabsorber nach mindestens einem der vorherigen Ansprüche, **dadurch gekennzeichnet, dass** er ausgelegt ist, um vollständig durch Formung zwischen zwei Formteilen (60, 62) hergestellt zu werden, die relativ zueinander beweglich sind.

19. Stoßfänger für ein Fahrzeug, **dadurch gekennzeichnet, dass** er einen Stoßabsorber nach mindestens einem der vorherigen Ansprüche aufweist.

20. Verfahren zur Herstellung eines Stoßabsorbers nach mindestens einem der vorherigen Ansprüche, **dadurch gekennzeichnet, dass** der Stoßabsorber durch Formung hergestellt wird.

21. Verfahren nach dem vorherigen Anspruch, **dadurch gekennzeichnet, dass** der Stoßabsorber zwischen zwei Formteilen (60, 62) geformt wird, die relativ zueinander entlang einer Richtung (Z) beweglich sind, die der vertikalen Richtung des Stoßabsorbers entspricht.

22. Verfahren nach einem der zwei vorherigen Ansprüche, **dadurch gekennzeichnet, dass** der Stoßabsorber vollständig mithilfe von zwei Formteilen (60, 62) geformt wird, die relativ zueinander beweglich sind.
